Europäisches Patentamt

European Patent Office

Office européen des brevets

(11) Publication number: **0 241 007 B1**

(12) **EUROPEAN PATENT SPECIFICATION**

(45) Date of publication of patent specification: **12.01.94** (51) Int. Cl.5: **G11B 11/10**

(21) Application number: **87105191.8**

(22) Date of filing: **08.04.87**

(54) **Optical head.**

(30) Priority: **10.04.86 JP 83916/86**

(43) Date of publication of application:
**14.10.87 Bulletin 87/42**

(45) Publication of the grant of the patent:
**12.01.94 Bulletin 94/02**

(84) Designated Contracting States:
**DE FR GB IT**

(56) References cited:
**US-A- 3 480 933**

**XEROX DISCLOSURE JOURNAL, vol. 8, no. 4, July/August 1983, pages 367,368; D. CHENG et al.: "Readout enhancement by masking for magneto-optical storage systems"**

**PATENT ABSTRACTS OF JAPAN, vol. 10, no. 127 (P-455)[2184], 13th May 1986;& JP-A-60 251 533**

(73) Proprietor: **SHARP KABUSHIKI KAISHA**
**22-22 Nagaike-cho**
**Abeno-ku**
**Osaka 545(JP)**

(72) Inventor: **Takahashi, Akira**

**9-1-506, Akishinosatusuki-cho**
**Nara-shi Nara-ken(JP)**
Inventor: **Deguchi, Toshihisa**
**C-722,Daiya-Haitsu Gakuenmae**
**2-200-5,Gakuendaiwa-c**
**Nara-shi Nara-ken(JP)**
Inventor: **Murakami, Yoshiteru**
**9-16-605, Ohata-cho**
**Nishinomiya-shi Hyogo-ken(JP)**
Inventor: **Mieda, Michinobu**
**2613-1, Ichonomoto-cho**
**Tenri-shi Nara-ken(JP)**
Inventor: **Van, Kazuo**
**1-2-405, Saidaijikunimi-cho**
**Nara-shi Nara-ken(JP)**
Inventor: **Ohta, Kenji**
**9-17, Hirosedai, 3-chome**
**Kawai-cho**
**Kitakatsuragi-gun Nara-ken(JP)**

(74) Representative: **Selting, Günther, Dipl.-Ing. et al**
**Patentanwälte**
**von Kreisler-Selting-Werner**
**Postfach 10 22 41**
**D-50462 Köln (DE)**

## Description

The present invention relates to a memory device for a magnetooptical disk as well as to the use of a cross-shaped diaphragm in a memory device comprising an optical disk having a substrate with different double refractions.

Recently, much attention is focused, as an erasable optical memory, on a magnetooptical disk. The substrate of the magnetooptical disk is made of glass or plastics. Especially, in view of productivity and easiness of handling, favorable consideration is given to plastics such as acrylic plastic, polycarbonate plastic, etc. However, these plastics are readily subjected to double refraction especially in the case of polycarbonate plastic in comparison with glass and therefore, have optical characteristics inferior to those of glass. Especially, in a disk made of plastic produced by injection molding, double refraction is likely to take place. Further, in the magnetooptical disk, signals are reproduced by using linearly polarized light. Thus, if double refraction takes place in the substrate of the magnetooptical disk, linearly polarized light is elliptically polarized, thereby resulting in excessive deterioration of quality of the reproduced signals.

Namely, when signals are actually read from the magnetooptical disk, laser beams are usually transmitted through the substrate by using a lens having a numerical aperture (NA) of 0.5 to 0.6 so as to be condensed. When double refraction takes place in the substrate, linearly polarized light incident upon the substrate is elliptically polarized while being transmitted through the substrate. The above described double refraction is classified into two kinds, i.e. double refraction in the direction of the plane of the substrate and double refraction in a direction perpendicular to the plane of the substrate. It is to be noted here that the double refraction in the direction perpendicular to the plane of the substrate means that there is a difference between a refractive index in the direction perpendicular to the plane of the substrate and that in the direction of the plane of the substrate. Meanwhile, the double refraction in the plane of the substrate means that there is a difference between refractive indexes in different directions in the plane of the substrate. The double refraction in the direction of the plane of the substrate equally affects polarized light at any position of a bundle of rays. On the other hand, effects of the double refraction in the direction perpendicular to the plane of the substrate, on polarized light varies according to positions in the bundle of rays. Namely, at the center of the bundle of rays, polarized light is incident upon the substrate in a direction approximately perpendicular to the plane of the substrate and therefore, is affected substantially only by the double refraction in the direction of the plane of the substrate so as to be hardly affected by the double refraction in the direction perpendicular to the plane of the substrate. However, since light at an outer portion of the bundle of rays is obliquely incident upon the substrate and thus, is affected by not only the double refraction in the direction of the plane of the substrate but the double refraction in the direction perpendicular to the plane of the substrate.

In the case where an orientation of polarized light incident upon the substrate is parallel to or perpendicular to the plane of incidence, linearly polarized light is maintained as it is. A substrate produced by injection molding of polycarbonate plastic has a double refraction in the direction of the plane of the substrate on the order of $10^{-6}$ but has a double refraction in the direction perpendicular to the plane of the substrate on the order of $10^{-4}$ greater by two figures than the double refraction in the direction of the plane of the substrate. Hence, it follows that change of linearly polarized light to elliptically polarized light is mainly caused by the double refraction in the direction perpendicular to the plane of the substrate.

It is supposed here that a Z-axis is directed in a direction perpendicular to the principal plane of the substrate and an X-axis, a Y-axis and the Z-axis have refractive indexes $nx$, $ny$ and $nz$, respectively. Furthermore, assuming that character $\alpha$ denotes an angle formed between the plane of incidence of laser beams and the X-axis and character $\theta$ denotes an angle of refraction on the substrate, a refractive index $ns$ in the direction perpendicular to the plane of incidence is expressed by the following equation approximately.

$$ns \cong 1/\sqrt{\sin^2\alpha/(nx)^2 + \cos^2\alpha/(ny)^2}$$
where: $|nx\text{-}ny| \ll |(nx+ny)/2\text{-}nz|$

Meanwhile, a refractive index $np$ in the direction of the plane of incidence is given by the equation.

$$np \cong 1/\sqrt{\cos^2\theta(\cos^2\alpha/(nx)^2 + \sin^2\alpha/(ny)^2) + \sin^2\theta/(nz)^2}$$

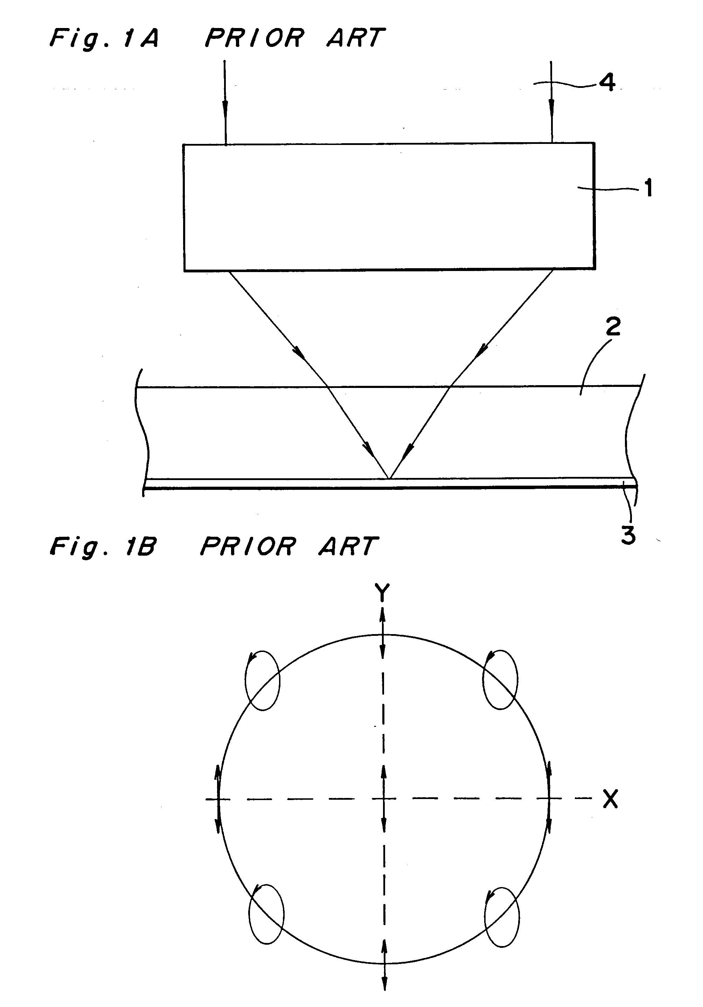

Fig. 1 shows how reflected light undergoes polarization at respective positions of a bundle of rays when linearly polarized light polarized in the direction of the X-axis is incident upon a prior art magnetooptical disk. Fig. 1A is a side elevational view showing a portion in the vicinity of the prior art magnetooptical disk and includes a condenser lens 1, a plastic substrate 2, a recording medium 3 and a light beam 4. Fig. 1B is a top plan view of Fig. 1A and shows polarization of reflected light at respective positions of the bundle of rays. The linearly polarized light is maintained as it is on the X-axis and the Y-axis but gradually changes elliptically as the position of the bundle of rays is further outwardly displaced in directions forming an angle of 45 degrees with the X-axis and the Y-axis, thereby resulting in deterioration of quality of the reproduced signals.

A magneto-optical memory device (Xerox Disclosure Journal, Volume 8, No. 4, July/August 1983) comprises a mask with a cross-like aperture mounted in the front of the read detector, which detects light reflected at a recording film. The mask is aligned with the polarization axis of the read beam in order to eliminate noises generated when light proceeding in air is reflected at the recording film. Such noises are generated even if the incident light is reflected without passing any substrate, due to the phenomenon that a phase difference is produced between the component of P-polarized light and the component of S-polarized light, according to the incident angle of light upon the recording film. The phase difference is produced at a peripheral portion of light which is spaced from the optical axis and has a large incident angle so that reflected light becomes elliptically polarized light. The known memory device is not adapted to eliminate a phase difference between P-polarized and S-polarized light due to double refraction taking place in the substrate of an optical disk which has optical anisotropy.

A further magneto-optical memory device is known from US-A-3 480 933. This memory device is provided with an iris for cutting the outer portion of the bundle of rays reflected from the optical storage medium. In the specification of the above-mentioned document it is stated that surface imperfections of the storage medium causes scattering of the light in a larger solid angle. By means of the iris this kind of noise shall be filtered out of the bundle of reflected rays.

It is the object of the present invention to provide a memory device having an optical disk subjected to double refraction in which reproduced signals of sufficiently high quality can be obtained.

This problem is solved, according to the invention, with the features of claim 1 as well as of claim 2, respectively.

The memory device of the present invention comprises an optical disk having a recording medium and a substrate. The rays reflected by the recording medium are transmitted through the substrate to the optical system of the optical head for detecting the rays. The substrate causes elliptically polarized rays in the outer portion of the bundle of rays. This phenomenon is caused by different double refraction of the substrate in directions perpendicular to and in the plane of said disk. The diaphragm is provided with a substantially cross-shaped through-opening defined by four arcuate light cutting portions diagonally opposed to each other.

This object and features of the present invention will become apparent from the following description taken in conjunction with the preferred embodiment thereof with reference to the accompanying drawings, in which:

Fig. 1A   is a side elevational view of a prior art magneto-optical disk (already referred to);

Fig. 1B   is a top plan view of Fig. 1A (already referred to);

Fig. 2   is a view showing an arrangement of a reproducing optical system of an optical head according to one preferred embodiment of the present invention;

Fig. 3   is a are top plan view showing the light cutting diaphragm employed in the optical head of Fig. 2; and

Fig. 4   is a graph indicative of improvement of modulation degree by the use of the light cutting diaphragm of Fig. 3.

Before the description of the present invention proceeds, it is to be noted that like parts are designated by like reference numerals throughout several views of the accompanying drawings.

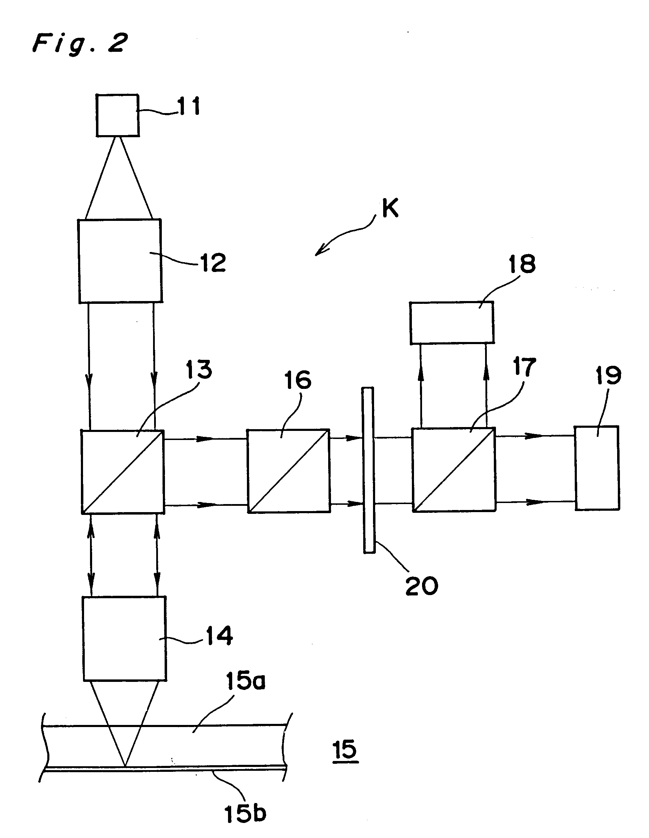

Referring now to the drawings, there is shown in Fig. 2 a memory device comprising an optical head K according to one preferred embodiment of the present invention. The memory device includes a laser diode 11, a condenser lens 12, a half mirror 13, a condenser lens 14, a disk 15, a half mirror 16, an analyzer 17 having an axis of polarization set at an angle of 45 degrees and photodetectors 18 and 19. The disk 15 includes a polycarbonate substrate 15a and a recording medium 15b. A bundle of rays introduced by the half mirror 16 is used for a servomechanism of the optical head K. Outputs of the photodetectors 18 and 19 act as reproduced signals.

The memory device further includes a light cutting diaphragm 20 for cutting elliptically polarized light referred to earlier. The light cutting diaphragm 20 is made of opaque material such as metals, paper, plastics or the like and is interposed between the half mirror 16 and the analyzer 17.

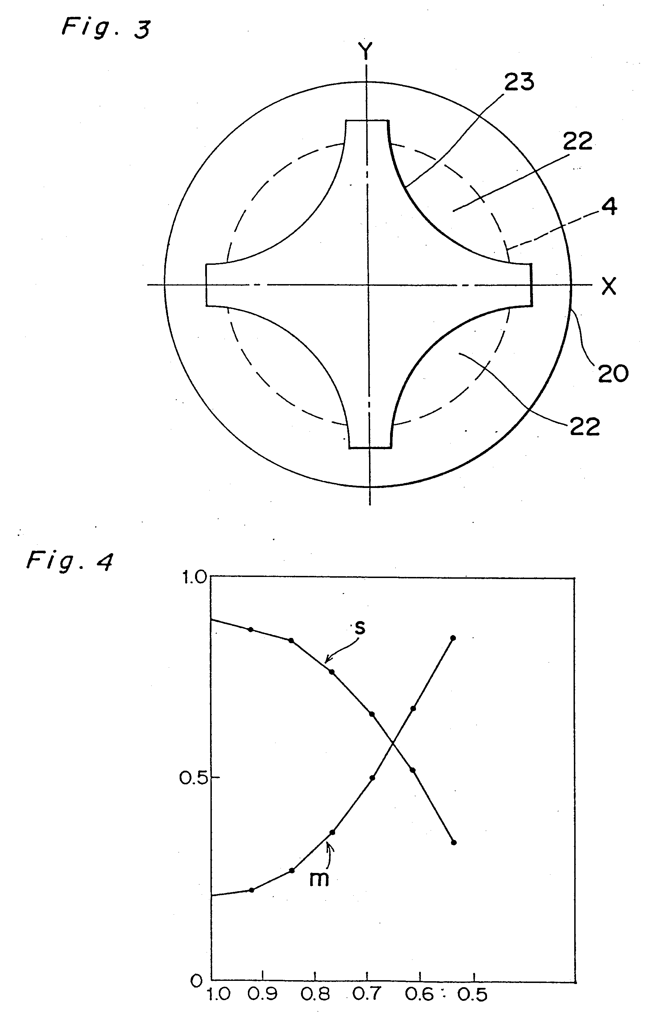

According to Fig. 3, the light cutting diaphragm 20 is formed with a substantially cross-shaped through-opening 23 defined by four arcuate light cutting portions 22 for cutting four outer portions of the bundle of rays, respectively, which arcuate light cutting portions are diagonally opposed so as to form an angle of 45 degrees with the X-axis and the Y-axis, so as to cut outer portions of the bundle of rays, which outer portions change elliptically. The outer diameter of the light beam 4 is shown by dotted lines.

Generally, if reflected light from a disk is elliptically polarized, modulation degree of signals drops, so that noises in the signals increase, thereby resulting in drop of a signal-to-noise ratio (S/N).

Supposing that a quantity of light for signals and a modulation degree of a glass disk each assume a value of 1, Fig. 4 is a graph having an ordinate indicative of quantity s of light for signals and modulation degree m of the polycarbonate substrate 15a and an abscissa indicative of a ratio of an area of the through-hole 23 to that of the light beam 4 in the case where the light cutting diaphragm 20 of Fig. 3 is employed. In Fig. 4 the lens has a numerical aperture (NA) of 0.6, an index $n_o$ of double refraction in the direction of the X-axis is 1.585, an index of double refraction in the direction of the Y-axis is ($n_o + 5 \times 10^{-6}$), an index of double refraction in the direction of the Z-axis is ($n_o + 6 \times 10^{-4}$) and the half-mirror has a transmittance of 0.03. It is seen from Fig. 4 that the modulation degree m is remarkably increased by cutting the portions of the light beam 4, which are elliptically polarized most. Although the quantity s of light for signals also drops, the drop assumes an absolute value on the order of mere several $\mu$W and therefore, does not lead to drop of the S/N as far as an avalanche photodiode is employed as the photodetector.

As is clear from the foregoing, in accordance with the present invention, it becomes possible to obtain reproduced signals of high quality even in the case where the plastic substrate likely to be subjected to double refraction is employed.

## Claims

1. A memory device comprising
   - an optical head (K) having an optical system (17,18,19) for emitting and detecting a bundle (4) of reflected rays and comprising a diaphragm (20) formed with a substantially cross-shaped through-opening (23) for cutting at least an outer portion of said bundle (4) of rays, and
   - an optical disk (15) having a recording medium (15b) reflecting said bundle of rays (4) to be detected by said optical head (K),

   **characterized in that**
   - said optical disk (15) is provided with a substrate (15a) for said recording medium (15b), said substrate (15a) causing a first double refraction in a direction perpendicular to the plane of said disk (15) and a second double refraction in a direction of the plane of said disk (15), said first double refraction being different from said second double refraction,

   - said substrate (15a) of said optical disk (15) is provided before the recording medium (15b) such that the rays emitted by the optical head (K) are transmitted through said substrate (15a), reflected at said recording medium (15b), and transmitted through the substrate (15a), and
   - said substantially cross-shaped through-opening (23) of said diaphragm (20) is defined by four arcuate light cutting portions (22) diagonally opposed to each other, and is provided in the course of said optical system (17,18,19), for cutting at least an outer portion of said bundle (4) of rays reflected from said recording medium (15b) and transmitted through said substrate (15a).

2. Use of an optical head (K) having an optical system (17,18,19) for detecting a bundle (4) of rays reflected from a recording medium (15b) and a diaphragm (20) for cutting at least an outer portion of the bundle (4) of reflected rays, said diaphragm (20) being formed with a substantially cross-shaped through-opening (23) defined by four arcuate light cutting portions (22) diagonally opposed to each other, in an optical memory device comprising an optical disk (15) having a substrate (15a) for the recording medium (15b), with the rays reflected from the recording medium (15b) being transmitted through the substrate (15a) to the optical head (K) and the outer portion of the bundle (4) of reflected rays including elliptically polarized rays caused by different double refractions of the substrate (15a) in directions perpendicular to and in the plane of said optical disk (15), said double refractions being caused by said substrate (15a).

## Patentansprüche

1. Speichervorrichtung, mit
   - einem optischen Kopf (K) mit einem optischen System (17,18,19) zum Emittieren und Erkennen eines Bündels (4) reflektierter Strahlen und mit einer Blende (20), die mit einer im wesentlichen kreuzförmigen Durchgangsöffnung (23) ausgebildet ist, um wenigstens einen äußeren Bereich des Strahlenbündels (4) abzuschneiden, und
   - einer optischen Platte (15) mit einem Aufzeichnungsmedium (15b), das das von dem optischen Kopf (K) zu erkennende Strahlenbündel (4) reflektiert,

   **dadurch gekennzeichnet, daß**

- die optische Platte (15) mit einem Substrat (15a) für das Aufzeichnungsmedium (15b) versehen ist, wobei das Substrat (15a) eine erste Doppelbrechung in einer zu der Ebene der Platte (15) senkrechten Richtung und eine zweite Doppelbrechung in Richtung der Ebene der Platte (15) bewirkt, wobei die erste Doppelbrechung verschieden von der zweiten Doppelbrechung ist,
- das Substrat (15a) der optischen Platte (15) vor dem Aufzeichnungsmedium (15b) vorgesehen ist, derart, daß die von dem optischen Kopf (K) emittierten Strahlen durch das Substrat (15a) gesandt, an dem Aufzeichnungsmedium (15b) reflektiert und durch das Substrat (15a) gesandt werden, und
- die im wesentlichen kreuzförmige Durchgangsöffnung (23) der Blende (20) von vier einander diagonal entgegengesetzten gebogenen Lichtabschneidebereichen (22) definiert ist und in dem Strahlengang des optischen Systems (17,18,19) zum Abschneiden wenigstens eines äußeren Bereichs des von dem Aufzeichnungsmedium (15b) reflektierten und durch das Substrat (15a) gesandten Strahlenbündels (4) vorgesehen ist.

2. Verwendung eines optischen Kopfes (K) mit einem optischen System (17,18,19) zum Erkennen eines Bündels (4) von von einem Aufzeichnungsmedium (15b) reflektierten Strahlen, und einer Blende (20) zum Abschneiden wenigstens eines äußeren Bereichs des Bündels (4) reflektierter Strahlen, wobei die Blende (20) mit einer im wesentlichen kreuzförmigen Durchgangsöffnung (23) versehen ist, die durch vier einander diagonal entgegengesetzte gebogene Lichtabschneidebereiche (22) definiert ist, bei einer optischen Speichervorrichtung, die eine optische Platte (15) mit einem Substrat (15a) für das Aufzeichnungsmedium (15b) aufweist, wobei die von dem Aufzeichnungsmedium (15b) reflektierten Strahlen durch das Substrat (15a) zu dem optischen Kopf (K) gesandt werden und der äußere Bereich des Bündels (4) reflektierter Strahlen elliptisch polarisierte Strahlen aufweist, die durch unterschiedliche Doppelbrechungen des Substrats (15a) in senkrechter Richtung zu der Ebene der optischen Platte (15) und in Richtung dieser Ebene verursacht worden sind, wobei die Doppelbrechungen von dem Substrat (15a) verursacht worden sind.

## Revendications

1. Dispositif de mémoire comprenant :
   - une tête optique (K) ayant un système optique (17, 18, 19) destiné à émettre et détecter un faisceau (4) de rayons réfléchis, et comprenant un diaphragme (20) muni d'une ouverture traversante (23) sensiblement en forme de croix pour occulter au moins une partie extérieure dudit faisceau (4) de rayons, et
   - un disque optique (15) ayant un milieu d'enregistrement (15b) qui réfléchit ledit faisceau de rayons (4) qui doit être détecté par ladite tête optique (K),
   caractérisé en ce que
   - ledit disque optique (15) est muni d'un substrat (15a) pour ledit milieu d'enregistrement (15b), ledit substrat (15a) engendrant une première double réfraction dans une direction perpendiculaire au plan dudit disque (15) et une deuxième double réfraction dans une direction du plan dudit disque (15), ladite première double réfraction étant différente de ladite deuxième double réfraction,
   - ledit substrat (15a) dudit disque optique (15) est prévu en amont du milieu d'enregistrement (15b), de sorte que les rayons émis par la tête optique (K) sont transmis à travers ledit substrat (15a), réfléchis sur ledit milieu d'enregistrement (15b), et transmis à travers le substrat (15a), et
   - ladite ouverture traversante (23) sensiblement en forme de croix dudit diaphragme (20) est définie par quatre parties courbes (22) d'occultation de la lumière opposées en diagonale entre elles et elle est prévue sur le trajet dudit système optique (17, 18, 19) pour occulter au moins une portion extérieure dudit faisceau (4) de rayons qui est réfléchie par ledit milieu d'enregistrement (15b) et transmis à travers ledit substrat (15a).

2. Utilisation d'une tête optique (K) ayant un système optique (17, 18, 19) destiné à détecter un faisceau (4) de rayons réfléchi par un milieu d'enregistrement (15b) et un diaphragme (20) destiné à occulter au moins une partie extérieure du faisceau (4) de rayons réfléchis, ledit diaphragme (20) étant muni d'une ouverture traversante (23) sensiblement en forme de croix, définie par quatre parties courbes (22) d'occultation de la lumière, opposées en diagonale entre elles, dans un dispositif de mémoire optique comprenant un disque optique (15) ayant un substrat (15a) pour le milieu d'enregistrement (15b), les rayons réfléchis par le milieu d'enregistrement (15b) étant transmis à travers le substrat (15a) à la tête optique (K) et la partie extérieure du faisceau (4) de rayons réfléchis comprenant des rayons polarisés elliptiquement engendrés par différentes doubles réfractions du substrat (15a) dans la direction perpendiculaire au plan dudit disque optique (15) et dans la direction de ce plan, lesdites doubles réfractions étant engendrées par ledit substrat (15a).

Fig. 1A    PRIOR ART

Fig. 1B    PRIOR ART

*Fig. 2*

Fig. 3

Fig. 4